# EUROPÄISCHE PATENTSCHRIFT

(11) **EP 0 787 604 B1**
(45) Veröffentlichungstag und Bekanntmachung des Hinweises auf die Patenterteilung: **11.04.2001**
(21) Anmeldenummer: 97101181.2
(22) Anmeldetag: 25.01.1997
(51) Int. Cl.: B60C 19/08

(54) **Fahrzeugreifen**
Vehicle tyre
Bandage pneumatique pour véhicule

(30) Priorität: 01.02.1996 DE 19603441
(43) Veröffentlichungstag der Anmeldung: 06.08.1997
(73) Patentinhaber: Continental Aktiengesellschaft, 30165 Hannover (DE)
(72) Erfinder: Teves, Reinhard, Dr., 30926 Seelze (DE); Blickwedel, Holger, Dr., 30625 Hannover (DE); Glasewald, Thomas, 30926 Seelze (DE); Sauerwald, H.-Jürgen, 59955 Winterberg 12 (DE); Reisdorf, Wolfgang, 4730 Homset (BE); Klaas, Andrej, 52070 Aachen (DE); Köhne, Stephan, 52072 Aachen (DE)

(56) Entgegenhaltungen:
- EP-A- 0 658 452
- DE-A- 4 002 628
- DE-A- 4 417 914
- GB-A- 544 757
- GB-A- 551 657

## Beschreibung

Die Erfindung betrifft einen Fahrzeugreifen zur Montage auf eine elektrisch leitende Felge, der eine radial äußere Laufgummischicht aufweist, die einen spezifischen elektrischen Widerstand größer 10 exp 10 Ohm x cm besitzt.

Bei einem Reifen mit einer Lauffläche, die eine geringe elektrische Leitfähigkeit aufweist, besteht das Problem, daß es während des Fahrbetriebes des Reifens zur elektrischen Aufladung der Lauffläche kommt. Mögliche Folgen einer solchen Aufladung können z. B. Funkenüberschläge sein, die im schlimmsten Falle zu einer Explosion führen können. Insbesondere bei Silica enthaltenden Laufflächen, die dem Reifen an sich gute Fahreigenschaften, wie einen geringen Rollwiderstand und gute Naßrutscheigenschaften verleihen, ist deren geringe elektrische Leitfähigkeit von bedauernswertem Nachteil.

Es wurden Versuche unternommen, die elektrische Leitfähigkeit von Laufflächen zu erhöhen, indem eine dünne Schicht aus einer leitenden Gummimischung auf die nicht leitende Lauffläche aufgebracht wurde. Nachteilig dabei ist jedoch, daß während des Fahrbetriebes diese Schichten abgerieben werden können bzw. Risse in diesen Schichten auftreten. Damit besteht kein gesicherter Kontakt von der leitfähigen Schicht zur Straßenoberfläche. Weiterhin ist bekannt (EP 0 658 452 A1), eine leitfähige Schicht als umlaufendes Band durch die gesamte Dicke einer Lauffläche verlaufen zu lassen. Das hat aber den Nachteil, daß diese leitfähige Schicht eine durchgehende Mischungstrennschicht in der Lauffläche darstellt, die sich permanent im Bodenaufstandsbereich befindet. Durch den Fahrbetrieb des Reifens kann es zu einer Auftrennung der Lauffläche entlang dieser Mischungstrennschicht kommen. Somit wird sogar ein Defekt des Reifens verursacht.
Des weiteren sind Metalldrähte bekannt (DE-GM 19 92 389), die zur Ableitung von elektrostatischer Ladung in den Reifen eingebracht werden und bis an die Laufflächenoberfläche reichen. Aber aufgrund der geringen mechanischen Beständigkeit dieser Drähte und auftretender Haftprobleme zum Gummimaterial ist keine gesicherte Ableitung über die gesamte Lebensdauer einer Reifens gewährleistet. Außerdem sind derartige Drahtkonstruktionen z. B. für einen Gürtelreifen ungeeignet, da der Gürtel im Laufe des Fahrbetriebes durch starre Metalldrähte zerstört werden würde.

Der Erfindung liegt nun die Aufgabe zugrunde, bei einem Reifen der eingangs genannten Art eine ausreichende elektrische Leitfähigkeit bereitzustellen, ohne dabei Einbußen in den Fahreigenschaften bzw. vorzeitige Defekte des Reifens hinzunehmen.

Gelöst wird diese Aufgabe dadurch, daß die Laufgummischicht im Bereich der Bodenaufstandsfläche des Reifens zumindest einen im wesentlichen radial verlaufenden Kanal aufweist, der mit einem Polymerpfropfen aus Gummi und/oder Kunststoff mit einem spezifischen elektrischen Widerstand kleiner 10 exp 8 Ohm x cm ausgefüllt ist, und daß dieser Polymerpfropfen zumindest die elektrisch schlecht leitende Laufgummischicht vollständig durchdringt.

Der Polymerpfropfen aus Gummi und/oder Kunststoff soll in dieser Anmeldung auch Mischungen aus verschiedenen Gummi- und/oder Kunststoffen beinhalten. Des weiteren kann der "Polymerpfropfen aus Gummi und/oder Kunststoff" für den Fachmann übliche Zusätze, wie z. B. Beschleuniger, Vernetzungsmittel, Füllstoffe und Pigmente enthalten.

Die erfindungsgemäßen elektrisch leitfähigen Polymerpfropfen reichen aus, um die während des Fahrbetriebes des Reifens aufgenommene elektrostatische Ladung an die Straßenoberfläche abzuleiten. Der wesentliche Anteil der aufgenommenen Ladungen verteilt sich anderenfalls über das gesamte Fahrgestell des Fahrzeuges, so daß eine gefährliche Ladung entsteht und es beim Betanken zur Explosion kommen kann. Die Ableitung findet über Felge, Seitenwand, Gürtelgummierung, ggf. Bandagengummierung und den erfindungsgemäßen Polymerpfropfen an die Straßenoberfläche statt. Da nur jeweils ein Polymerpfropfen, dessen Durchmesser zwischen 1 und 10 mm liegen soll, in der Bodenaufstandsfläche erforderlich ist, ist die Fläche des Polymerpfropfens auf den Reifenumfang bezogen, die mit der Fahrbahnoberfläche Kontakt hat, sehr gering. Deshalb können als Polymerpfropfenmaterial auch Gummi und/oder Kunststoffe verwendet werden, die keinen positiven Einfluß auf die Eigenschaften (z. B. Rollwiderstand, Naßrutschverhalten) des Reifens aufweisen, sofern deren elektrischer Widerstand kleiner 10 exp 8 Ohm x cm ist. Ein weiterer Vorteil des relativ geringen Durchmessers der Polymerpfropfen, der durch die nicht leitende Laufflächenoberfläche bis auf eine gut leitende Schicht reicht, besteht darin, daß ein Auseinandertrennen der gesamten Lauffläche aufgrund von ausgedehnten Mischungstrennschichten nicht möglich ist. Aufgrund der geometrischen Struktur (geringer Durchmesser) der Polymerpfropfen- wird ein Ausbröckeln des Polymerpfropfen aus der Lauffläche verhindert, da Haftungsprobleme keine Rolle spielen. Die Auswahl an einsetzbaren Mischungen für Polymerpfropfen und Laufflächen wird dadurch nicht beschränkt.

Die erfindungsgemäßen Polymerpfropfen können sowohl in Vollgummireifen als auch in Luftreifen eingebracht sein. Wenn es sich dabei um einen profilierten Reifen handelt, ist es vorteilhaft, wenn sich die Polymerpfropfen in Bereichen von erhabenen Profilabschnitten wie Klötzen oder Rippen befinden, da diese Profilelemente mit der Fahrbahnoberfläche in unmittelbarem Kontakt stehen und somit auftretende Ladungen sofort ableiten. Prinzipiell ist es aber auch möglich, Polymerpfropfen an nicht erhabenen Profilabschnitten (Rillen) einzubringen.

Der Polymerpfropfen soll einen spezifischen elektrischen Widerstand kleiner 10 exp 8 Ohm x cm aufweisen. Dafür eignet sich Gummi und/oder Kunststoff, der Ruß enthält. Insbesondere wird Ruß enthaltender Gummi bei der Reifenherstellung allgemein verwendet (z.B. als Gürtelgummierung), so daß eine zusätzliche Materialbereitstellung für die Polymerpfropfen entfallen kann. Es ist aber auch vorteilhaft, wenn die Polymerpfropfen aus Gummi oder Kunststoff bestehen, die leitende Polymere wie z. B. Polypyridine und/oder Polypyrrole und/oder Polyaniline enthalten. Dabei ist es auch möglich, diese genannten Substanzen allein als Polymerpfropfenmaterial einzusetzen. Diese Substanzen haben einen besonders niedrigen spezifischen elektrischen Widerstand, so daß der Durchmesser des Polymerpfropfens noch geringer gehalten werden kann, damit eine ausreichende Ableitung der elektrischen Ladung erfolgen kann. Das bringt den Vorteil mit sich, daß die Kontaktfläche, die der Polymerpfropfen zur Fahrbahnoberfläche hat, auch sehr klein ist, so daß die Fahreigenschaften des Reifens durch den Polymerpfropfen noch weniger beeinflußt werden.

Vorteilhaft ist es natürlich, wenn der Gummi und/oder Kunststoff des Polymerpfropfens einen besonders geringen spezifischen elektrischen Widerstand aufweist. Die Potentialdifferenz zwischen Boden und Fahrzeug ist in diesem Fall besonders hoch, was eine maximale Ableitung zur Folge hat. Vorteilhaft haben sich dabei spezifische elektrische Widerstände kleiner 100 Ohm x cm bewährt.

Besonders günstig ist es, wenn die äußere Laufgummischicht, die den Polymerpfropfen umgibt, eine Silica enthaltende Mischung ist. Dadurch werden die optimalen Fahreigenschaften (geringer Rollwiderstand, sehr gutes Naßrutschverhalten), die Silicamischungen mit sich bringen, ausgenutzt und gleichzeitig durch die Polymerpfropfen auch die schlechte elektrische Leitfähigkeit kompensiert. Generell können aber auch bisher bekannte Gummimischungen, die sich als äußere Laufgummischicht eignen und einen spezifischen elektrischen Widerstand größer 10 exp 10 Ohm x cm aufweisen mit Polymerpfropfen versehen werden.

Der erfindungsgemäße Reifen mit Polymerpfropfen kann hergestellt werden, indem in den bereits vulkanisierten Reifen Polymerpfropfen aus vulkanisiertem Gummi und/oder Kunststoff mit einem spezifischen elektrischen Widerstand kleiner 10 exp 8 Ohm x cm mittels einer Injiziervorrichtung eingebracht werden, die sich zumindest durch den Teil der Laufgummischicht erstrecken, der einen spezifischen elektrischen Widerstand größer 10 exp 10 Ohm x cm aufweist. Um Polymerpfropfen in eine schlecht leitende Laufgummischicht vulkanisierter Reifen einzubringen, sind Kanäle im wesentlichen in radial innerer Richtung erforderlich, die z. B. durch ein Bohrwerkzeug, das einen Teil der Injiziervorrichtung bildet, erzeugt werden und die zumindest durch die gesamte schlecht leitende Laufgummischicht reichen. Vorzugsweise erstrecken sich die Kanäle bis an die Schicht im Reifeninneren, die den geringsten elektrischen Widerstand aufweist, um einen maximale Ladungsableitung zu erzielen. Die Variante des Einbringens von leitfähigen Polymerpfropfen in vulkanisierte Reifen bringt den Vorteil mit sich, daß gezielt in den erhabenen Profilabschnitten (Klötze, Rippen) leitfähige Polymerpfropfen eingebracht werden können, so daß eine Optimierung der Polymerpfropfenanzahl erreicht wird.

Eine andere Möglichkeit für die Herstellung des erfindungsgemäßen Reifens mit leitfähigen Polymerpfropfen besteht darin, in die schlecht leitende Laufgummischicht unvulkanisierter Reifen leitfähige Mischungen aus unvulkanisiertem Gummi und/oder Kunststoff einzubringen. Das kann mittels einer Injiziervorrichtung, die das leitfähgie Polymerpfropfenmaterial in Form von unvulkanisierten Gummimischungen und/oder Kunststoffmischungen oder Lösungen hieraus enthält. Es ist auch möglich, tiefgekühltes Polymerpfropfenmaterial zu injizieren. Der Vorteil des Einbringens von Polymerpfropfen in einen unvulkanisierten Reifen besteht darin, daß eventuell entstehender Materialabfall unvernetzt und damit wieder verwendbar ist. Des weiteren wird durch gemeinsame Vulkanisieren/Vernetzen von Laufstreifen und Polymerpfropfen eine optimale Haftung zwischen diese beiden Komponenten erreicht. Außerdem können im Gegensatz zum Stand der Technik (EP 0 658 452 A1), in dem im allgemeinen zusätzliche Extruder zum Extrudieren des leitfähigen umlaufenden Bandes erforderlich sind, beim Einbringen der erfindungsgemäßen Polymerpfropfen billigere Vorrichtungen eingesetzt werden.

Prinzipiell können die Polymerpfropfen aus unvulkanisiertem Gummi und/oder Kunststoff auch in fertig gewickelten Reifenrohlingen eingebracht werden.

Das Einbringen von Polymerpfropfen in einem Reifen bzw. Reifenrohling eignet sich sowohl für Vollgummireifen als auch für Luftreifen.

Ein Ausführungsbeispiel wird anhand einer schematischen Zeichnung näher erläutert.

Es zeigt:
- Fig. 1:: im Querschnitt einen Fahrzeugluftreifen mit leitfähigen Polymerpfropfen, der auf einer Felge montiert ist,
- Fig. 2:: im Querschnitt einen Vollgummireifen mit leitenden Polymerpfropfen, der auf einer Felge montiert ist,
- Fig. 3:: Verfahrensablauf zur Herstellung eines unvulkanisierten Laufstreifens mit leitendem Polymerpfropfen,
- Fig. 4:: Verfahrensablauf zur Einbringung von Polymerpfropfen in einen unvulkanisierten Laufstreifen.

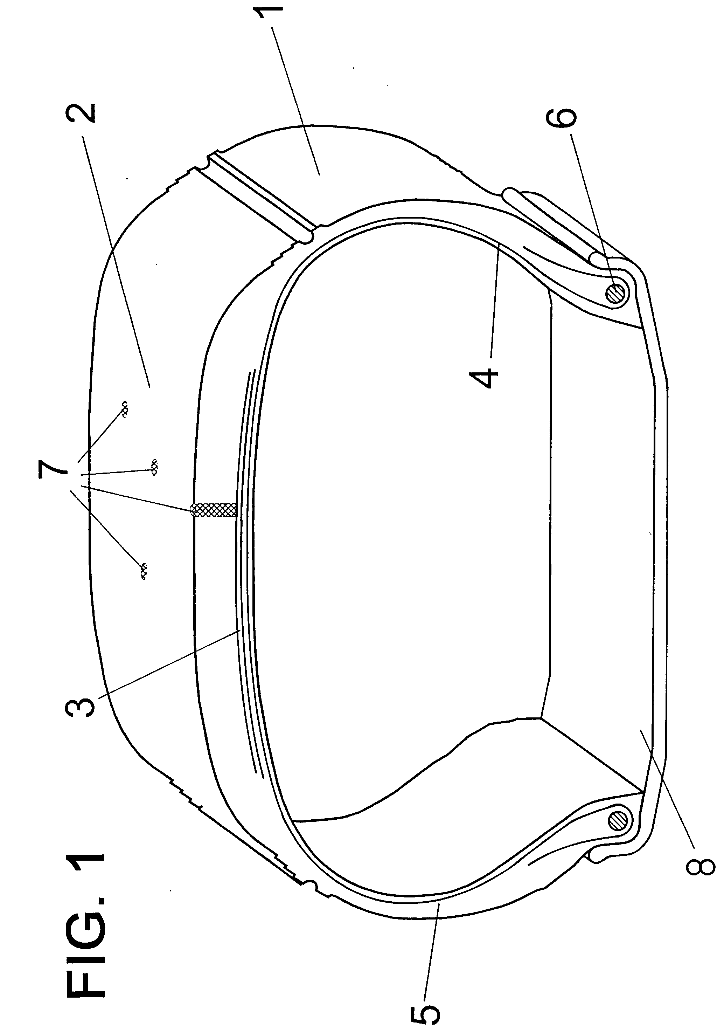

In der Figur 1 ist ein Fahrzeugluftreifen 1 mit Lauffäche 2, Gürtel 3, Karkasse 4, Seitenwand 5 und einem Wulst mit Wulstkernen 6 dargestellt, der auf einer Felge 8 montiert ist. In der Lauffläche 2 sind ausgehend von der äußeren schlecht leitenden Laufgummischicht nach radial innen verlaufende Kanäle, mit einem Durchmesser von z. B. 3 mm eingebracht, die mit leitendem Polymerpfropfen 7 ausgefüllt sind. Die Polymerpfropfen 7 sind in einem Abstand von maximal 10 cm voneinander entfernt, so daß zumindest ein Polymerpfropfen immer mit der Fahrbahn in Kontakt steht. Vorzugsweise sind die Polymerpfropfen 7 in den Profilklötzen des nicht dargestellten Profils der Lauffläche 2 eingebracht.

Die äußere Laufgummischicht weist einen spezifischen elektrischen Widerstand von 10 exp 11 Ohm x cm (schlecht leitend) auf und hat folgende Zusammensetzung:

**Tabelle 1:**

| Bestandteil: | Konzentration [pphr]: |
|---|---|
| Naturkautschuk (NR) | 10 |
| Lös. Styren-Butadien-Kautschuk (SSBR) | 60 |
| Butadienkautschuk (BR) | 30 |
| gefällte Kieselsäure | 70 |
| Aktivruß | 10 |
| Weichmacheröl | 20 |
| Alterungsschutzmittel | 3 |
| Bis-(3-triethoxysilylpropyl)tetrasulfid (TESPT) | 10 |
| Zinkweiß | 3 |
| Stearinsäure | 3 |
| Schwefel | 1,5 |
| Beschleuniger | 3,5 |

Die Polymerpfropfen 7 haben einen spezifischen elektrischen Widerstand von 60 Ohm x cm (gut leitend) und können z. B. folgende Zusammensetzung aufweisen:

**Tabelle 2:**

| Bestandteil: | Konzentration [pphr]: |
|---|---|
| Naturkautschuk (NR) | 10 |
| Lös. Styren-Butadien-Kautschuk (SSBR) | 60 |
| Butadienkautschuk (BR) | 30 |
| gefällte Kieselsäure | 10 |
| Aktivruß | 70 |
| Weichmacheröl | 20 |
| Alterungsschutzmittel | 3 |
| Zinkweiß | 3 |
| Stearinsäure | 3 |
| Schwefel | 1,5 |
| Beschleuniger | 3,5 |

Die Polymerpfropfen 7 in Figur 1 reichen von der Oberfläche der Lauffläche 2 bis zur nicht dargestellten Gürtelgummierung des Gürtels 3 des Fahrzeugluftreifens 1, da die Gürtelgummierung in den meisten Fällen bereits eine höhere elektrische Leitfähigkeit besitzt als die Lauffläche. Es ist natürlich auch denkbar, den Polymerpfropfen 7 bis direkt an den Gürtel 3 (metallische Festigkeitsträger) reichen zu lassen, da die Potentialdifferenz in diesem Fall besonders hoch ist und somit eine maximale Ladungsanzahl abgeführt wird. Prinzipiell ist es aber möglich, daß die Polymerpfropfen nur die äußerste Laufgummischicht durchdringen (z. B. Cap) und bis zu der nächsten Laufgummischicht (z. B. Base), die eine höhere Leitfähigkeit aufweist, reicht. Es ist natürlich auch möglich, die Polymerpfropfen an einer eventuell vorhandenen Bandagengummierung enden zu lassen. Die Ableitung der aufgenommenen elektrischen Ladungen erfolgt von der Felge über die vorhandenen elektrisch leitfähigen Gummischichten bzw. Festigkeitsträger bis hin zur Oberfläche der Fahrbahn.

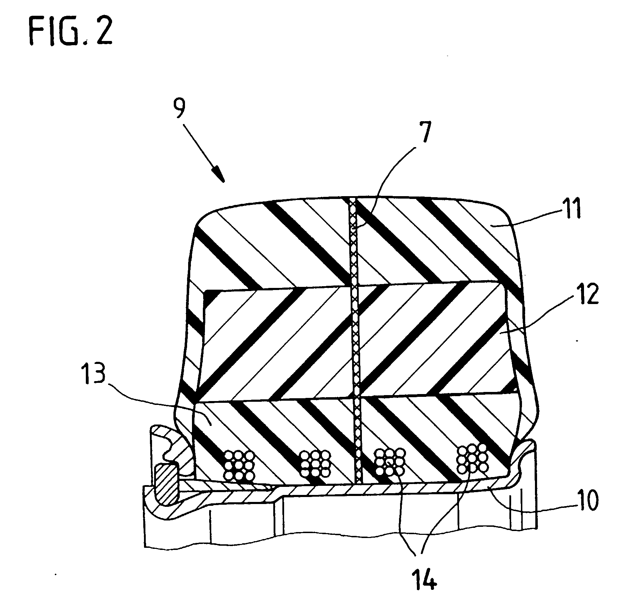

Auch in Vollgummireifen 9, wie in Figur 2 dargestellt, der eine Lauffläche 11, eine kompressible Gummischicht 12, eine starre Gummischicht 13 und Drahtkerne 14 aufweist und an einer Felge 10 aufgebracht ist, lassen sich leitfähige Polymerpfropfen einbringen. Diese reichen von der äußersten Laufgummischicht vorteilhafterweise, wie in Figur 2 dargestellt, bis zur metallischen Felge 14 oder sie enden an einer elektrisch besser leitfähigeren Gummischicht 12 oder 13.

Für die Herstellung des erfindungsgemäßen Vollgummireifens 9 nach Figur 2 (Polymerpfropfen reicht bis zur Felge) ist folgende -nicht dargestellte- Methode geeignet:
Mit einem Bohrwerkzeug wird ein bis zur Felge reichender Kanal erzeugt. Der vulkanisierte Gummi und/oder Kunststoff für den Polymerpfropfen mit einem Übermaß zur Bohrung wird von einer Wickeltrommel gezogen. Durch die Zugkraft verringert sich sein Durchmesser. Mittels einer Injiziervorrichtung, die ein drahtschlingenähnliches Gebilde zur Fassung des vulkanisierten Polymerpfropfens aufweist, wird der Polymerpfropfen durch die Bohrung gezogen. Der Polymerpfropfendurchmesser nimmt aufgrund der nachgelassenen Zugbeanspruchung zu, so daß der Polymerpfropfen fest im Kanal sitzt.

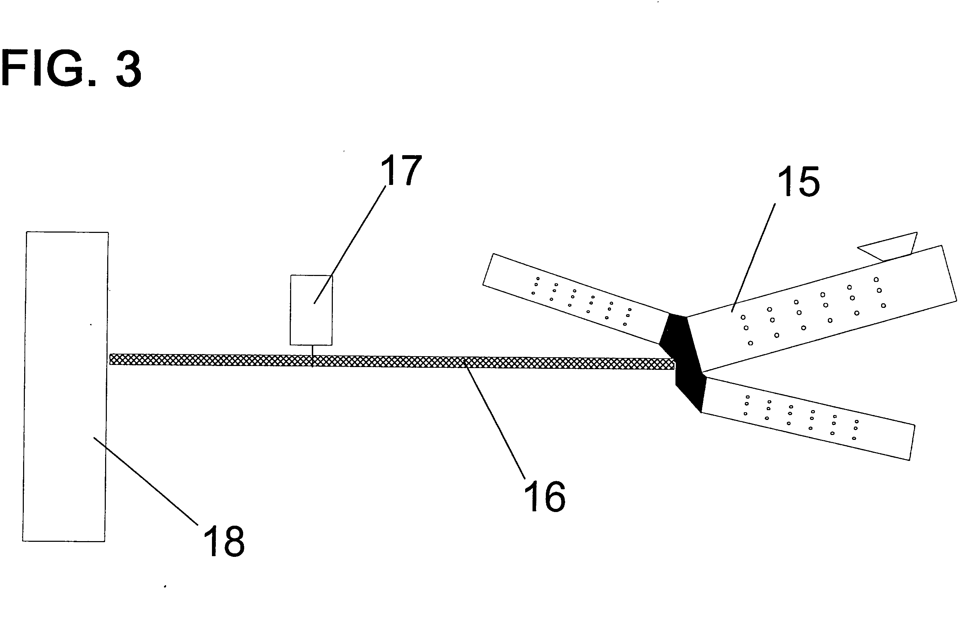

In der Figur 3 ist eine prinzipielle Möglichkeit ersichtlich, wie ein Fahrzeugreifen (z. B. Figur 1) mit einer verbesserten Leitfähigkeit hergestellt werden kann. So kann der durch ein Extrusionsverfahren 15 erhältliche Laufstreifen 16 (Mischungszusammensetzung Tabelle 1) bzw. zumindest der Teil des Laufstreifens, der im vulkanisiertem Zustand einen hohen spezifischen Widerstand aufweist, mit im vulkanisiertem Zustand leitfähigen Polymerpfropfen (Mischungszusammensetzung Tabelle 2) durchsetzt werden. Mittels einer Injiziervorrichtung 17 kann der leitende Polymerpfropfen eingebracht werden. Anschließend durchläuft der Laufstreifen 16 eine Kühleinrichtung 18 und wird für die weitere Reifenherstellung bereitgestellt. Prinzipiell ist es auch möglich, die Kühlung des Laufstreifens 16 bereits vor der Injizierung des Polymerpfropfens vorzunehmen.

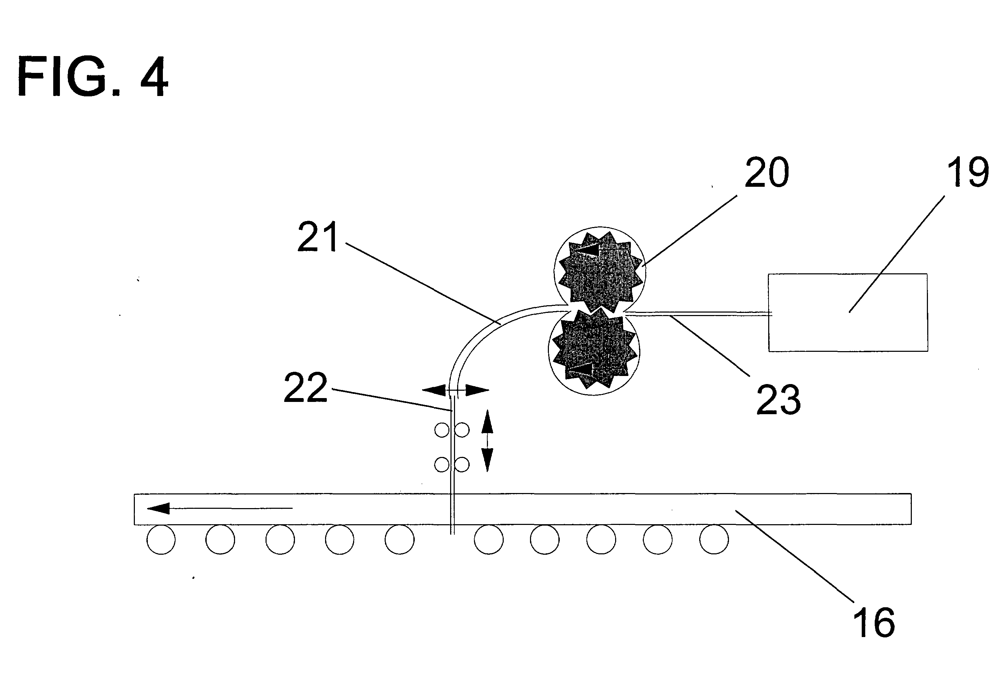

In der Figur 4 ist eine Variante einer Injiziervorrichtung 17 für die Einbringung von leitfähigen Polymerpfropfen in unvulkanisiertes Material (vgl. Figur 3) näher dargestellt. Aus einem Extruder oder Vorratsbehälter 19 wird der unvulkanisierte Gummi und/oder Kunststoff für den Polymerpfropfen (Tabelle 2) mittels einer Zahnradpumpe 20 direkt oder durch eine Leitung 23 zugeführt. Dabei kann es sich um viskose oder flüssige Mischungen aus Gummi und/oder Kunststoff oder Lösungen hieraus handeln. Für niederviskose Mischungen können niedermolekulare Polymere wie flüssiges Polyisopren oder Polybutadien verwendet werden. Die Zahnradpumpe 20 sorgt für einen gleichmäßigen Polymerpfropfenmaterialschub, der durch eine flexible Leitung 21 und eine Injizierkanüle mit Führungsrollen 22 in den fortlaufenden unvulkanisierten Laufstreifen 16 eingespritzt wird. Die Führungsrollen ermöglichen über eine Steuerung horizontale und/oder vertikale Bewegungen der Injizierkanüle, so daß z. B. Einstichtiefe und -zeit variiert werden können. Es werden somit Polymerpfropfen erzeugt, die im wesentlichen zylindrischen Charakter aufweisen. Im folgendem sind einige Verfahrensparameter angegeben:
Kanülendurchmesser: 0,5 mm
Einstechzeit: 0,01 s
Herausziehzeit: 0,1 s
Stichfrequenz: 3 mal/s
Fließgeschwindigkeit in der Kanüle: 7 cm/s

Es ist außerdem noch möglich, die leitfähigen Polymerpfropfen 7 aus unvulkanisiertem Gummi und/oder Kunststoff in fester Form einzubringen. Dazu werden Stifte aus unvulkanisiertem Gummi und/oder Kunststoff (Mischungszusammensetzung Tabelle 2) z. B. mit einem Durchmesser von 2 bis 5 mm und einer Länge, die zumindest der Stärke des Laufstreifenteils, der einen spezifischen Widerstand größer 10 exp 10 Ohm x cm aufweist, entspricht, unter - 80°C tiefgekühlt. Unter tiefgekühlt sollen prinzipiell Temperaturen um die Glastemperatur der Polymerpfropfenmischung und darunter verstanden werden. Die Injiziervorrichtung 17 enthält eine Kühlvorrichtung und ein Rammwerkzeug, so daß das Polymerpfropfenmaterial im tiefgekühlten Zustand mittels des Rammwerkzeuges in den unvulkanisierten Laufstreifen 16 eingebracht werden kann. Dabei ist es möglich, die Bewegung des Laufstreifens 16 zur Injizierung des tiefgekühlten Polymerpfropfens anzuhalten oder aber die Laufstreifengeschwindigkeit mit der der Injiziervorrichtung zu koppeln. Da bei dieser Ausführungsvariante i. a. Material aus dem Laufstreifen 16 mittels des Rammwerkzeuges herausgetrieben wird und in diesen entstandenen Hohlraum der unvulkanisierte tiefgekühlte Stift eingesetzt wird, wird ein unkontrolliertes "Vermengen" von Laufstreifenmaterial und Stifmaterial vermieden und somit eine gesichtert Ableitung elektrostatischer Ladungen zur Fahrbahnoberfläche gewährleistet.

## Patentansprüche

1. Verfahren zur Herstellung eines Fahrzeugreifens, der eine radial äußere Laufgummischicht aufweist, die einen spezifischen elektrischen Widerstand größer 10 exp 10 Ohm x cm besitzt und die Laufgummischicht im Bereich der Bodenaufstandsfläche des Reifens zumindest einen im wesentlichen radial verlaufenden Kanal aufweist, der mit einem Polymerpfropfen (7) aus Gummi und/oder Kunststoff mit einem spezifischen elektrischen Widerstand kleiner 10 exp 8 Ohm x cm ausgefüllt ist, so daß dieser Polymerpfropfen (7) zumindest die elektrisch schlecht leitende Laufgummischicht vollständig durchdringt,
**dadurch gekennzeichnet,**
daß in den fertig vulkanisierten Fahrzeugreifen Polymerpfropfen (7) aus vulkanisiertem Gummi und/oder Kunststoff mit einem spezifischen elektrischen Widerstand kleiner 10 exp 8 Ohm x cm mittels einer Injiziervorrichtung mit Bohrwerkzeug eingebracht werden, die sich zumindest durch den Teil der Laufgummischicht erstrecken, der einen spezifischen elektrischen Widerstand größer 10 exp 10 Ohm x cm aufweist.

2. Verfahren zur Herstellung eines Vollgummireifens nach Anspruch 1, dadurch gekennzeichnet, daß der Polymerpfropfen (7) aus vulkanisiertem Gummi und/oder Kunststoff mit einem Übermaß zum Bohrungsdurchmesser unter Ausnutzung von Zugkräften mittels einer Injiziervorrichtung durch die in der Laufgummischicht bis zur Felge reichenden Bohrung gezogen wird, so daß aufgrund nachlassender Zugbeanspruchung der Polymerpfropfen (7) fest in der Bohrung der Laufgummischicht sitzt.

3. Verfahren zur Herstellung einer Laufgummischicht für einen Fahrzeugreifen, insbesondere für einen Luftreifen (1) mit einem Laufstreifen (2)/Gürtelpaket (3) radial oberhalb bezüglich der Karkasse (4), der eine radial äußere Laufgummischicht aufweist, die einen spezifischen elektrischen Widerstand größer 10 exp 10 Ohm x cm besitzt und daß die Laufgummischicht im Bereich der Bodenaufstandsfläche des Reifens zumindest einen im wesentlichen radial verlaufenden Kanal aufweist, der mit einem Polymerpfropfen (7) aus Gummi und/oder Kunststoff mit einem spezifischen elektrischen Widerstand kleiner 10 exp 8 Ohm x cm ausgefüllt ist und daß dieser Polymerpfropfen (7) zumindest die elektrisch schlecht leitende Laufgummischicht vollständig durchdringt, dadurch gekennzeichnet, daß zumindest in dem Teil des durch Extrusion erzeugten Laufstreifens (16), dessen Mischung nach der Reifenvulkanisation einen spezifischen elektrischen Widerstand größer 10 exp 10 Ohm x cm aufweist, mittels einer Injiziervorrichtung (17) Polymerpfropfen (7) aus unvulkanisiertem Gummi und/oder Kunststoff mit einem spezifischen elektrischen Widerstand kleiner 10 exp 8 Ohm x cm eingebracht werden.

4. Verfahren nach Anspruch 3, dadurch gekennzeichnet, daß zur Herstellung der Polymerpfropfen (7) Mischungen aus unvulkanisiertem Gummi und/oder Kunststoff in flüssiger oder gelöster Form eingebracht werden.

5. Verfahren nach Anspruch 3, dadurch gekennzeichnet, daß zur Herstellung der Polymerpfropfen (7) Mischungen aus unvulkanisiertem Gummi und/oder Kunststoff in Form von tiefgekühlten Stiften eingebracht werden.

6. Verfahren nach zumindest einem der vorhergehenden Ansprüche, dadurch gekennzeichnet, daß für die Polymerpfropfen (7) Gummi und/oder Kunststoff verwendet wird, der zumindest Polypyridine und/oder Polypyrrole und/oder Polyaniline enthält.

7. Verfahren nach zumindest einem der vorhergehenden Ansprüche, dadurch gekennzeichnet, daß für die Polymerpfropfen (7) Gummi und/oder Kunststoff verwendet wird, der einen spezifischen Widerstand kleiner 100 Ohm x cm aufweist.

8. Verfahren nach zumindest einem der vorhergehenden Ansprüche, dadurch gekennzeichnet, daß als äußere Laufgummischicht eine Silica enthaltende Gummimischung verwendet wird.

## Claims

1. Method of producing a vehicle tyre, which includes a radially outer rubber tread layer which has a specific electrical resistance greater than 10 exp 10 ohm x cm, and the rubber tread layer includes, in the region of the ground engaging surface of the tyre, at least one substantially radially extending channel, which is filled with a polymer plug (7) formed from rubber and/or plastics material and having a specific electrical resistance smaller than 10 exp 8 ohm x cm, so that this polymer plug (7) fully penetrates at least the electrically poorly conductive rubber tread layer, characterised in that polymer plugs (7), formed from vulcanised rubber and/or plastics material and having a specific electrical resistance smaller than 10 exp 8 ohm x cm, are introduced into the ready-vulcanised vehicle tyre by means of an injecting device, which has a drilling tool, said plugs extending at least through the portion of the rubber tread layer which has a specific electrical resistance greater than 10 exp 10 ohm x cm.

2. Method of producing a solid rubber tyre according to claim 1, characterised in that the polymer plug (7), which is formed from vulcanised rubber and/or plastics material and is larger than the bore diameter, is drawn through the bore, which extends in the rubber tread layer as far as the rim, by means of an injecting device by utilising tensile forces, so that the polymer plug (7) sits firmly in the bore of the rubber tread layer because of decreasing tensile stress.

3. Method of producing a rubber tread layer for a vehicle tyre, more especially for a pneumatic tyre (1) having a tread strip (2)/belt bundle (3) radially above relative to the carcase (4), which tyre includes a radially outer rubber tread layer which has a specific electrical resistance greater than 10 exp 10 ohm x cm, and in that the rubber tread layer includes, in the region of the ground engaging surface of the tyre, at least one substantially radially extending channel, which is filled with a polymer plug (7) formed from rubber and/or plastics material and having a specific electrical resistance smaller than 10 exp 8 ohm x cm, and in that this polymer plug (7) fully penetrates at least the electrically poorly conductive rubber tread layer, characterised in that polymer plugs (7), formed from unvulcanised rubber and/or plastics material and having a specific electrical resistance smaller than 10 exp 8 ohm x cm, are introduced by means of an injecting device (17) at least in the portion of the tread strip (16), which has been produced by extrusion, and the mixture of which has a specific electrical resistance greater than 10 exp 10 ohm x cm after the vulcanisation of the tyre.

4. Method according to claim 3, characterised in that, to produce the polymer plugs (7), mixtures of unvulanised rubber and/or plastics material are introduced in liquid or dissolved form.

5. Method according to claim 3, characterised in that, to produce the polymer plugs (7), mixtures of unvulcanised rubber and/or plastics material are introduced in the form of chilled pins.

6. Method according to at least one of the preceding claims, characterised in that, for the polymer plugs (7), rubber and/or plastics material are/is used, which contains at least polypyridines and/or polypyrroles and/or polyanilines.

7. Method according to at least one of the preceding claims, characterised in that, for the polymer plugs (7), rubber and/or plastics material are/is used which has a specific resistance smaller than 100 ohm x cm.

8. Method according to at least one of the preceding claims, characterised in that a silica-containing rubber mixture is used as the outer rubber tread layer.

## Revendications

1. Procédé de fabrication d'un pneu de véhicule qui comprend une couche de caoutchouc extérieure radiale de la bande de roulement, laquelle couche de caoutchouc a une résistance électrique spécifique supérieure à 10 exp 10 ohms x cm et où la couche de caoutchouc de la bande de roulement, dans la zone de la surface de contact au sol du pneu, comprend au moins un canal s'étendant de façon pratiquement radiale, lequel canal est rempli d'un tampon polymère (7) en caoutchouc et/ou en matière plastique ayant une résistance électrique spécifique inférieure à 10 exp 8 ohms x cm, de sorte que ce tampon polymère (7)' pénètre complètement au moins la couche de caoutchouc de la bande de roulement électriquement mauvaise conductrice, caractérisé en ce que des tampons polymères (7) en caoutchouc vulcanisé et/ou en matière plastique, ayant une résistance électrique spécifique inférieure à 10 exp 8 ohms x cm, sont introduits avec un outil de perçage, à l'aide d'un dispositif d'injection, dans le pneu vulcanisé au stade final, lesquels tampons s'étendent au moins à travers la partie de la couche de caoutchouc de la bande de roulement qui a une résistance électrique spécifique supérieure à 10 exp 10 ohms x cm.

2. Procédé de fabrication d'un bandage plein en caoutchouc selon la revendication 1, caractérisé en ce que le tampon polymère (7) en caoutchouc vulcanisé et/ou en matière plastique, ayant un surdimensionnement par rapport au diamètre de perçage, est étiré à travers le perçage pratiqué dans la couche de caoutchouc de la bande de roulement et allant jusqu'à la jante, en utilisant des forces de traction à l'aide d'un dispositif d'injection, de sorte que, en raison d'un relâchement des contraintes de traction, le tampon polymère (7) est placé solidement dans le perçage de la couche de caoutchouc de la bande de roulement.

3. Procédé de fabrication d'une couche de caoutchouc de bande de roulement pour un pneu de véhicule, notamment pour un pneumatique (1) comprenant un ensemble bande de roulement (2)/ceinture(3) placé radialement au-dessus de la carcasse (4), lequel pneumatique présente une couche de caoutchouc de bande de roulement radiale extérieure qui a une résistance électrique spécifique supérieure à 10 exp 10 ohms x cm et où la couche de caoutchouc de la bande de roulement, dans la zone de la surface de contact au sol du pneu, comprend au moins un canal s'étendant pratiquement de façon radiale, lequel canal est rempli d'un tampon polymère (7) en caoutchouc et/ou en matière plastique ayant une résistance électrique spécifique inférieure à 10 exp 8 ohms x cm et où ce tampon polymère (7) pénètre complètement au moins la couche de caoutchouc de la bande de roulement électriquement mauvaise conductrice, caractérisé en ce que, au moins dans la partie de la bande de roulement (16) produite par extrusion, bande de roulement dont le mélange, après vulcanisation du pneu, a une résistance électrique spécifique supérieure à 10 exp 10 ohms x cm, des tampons polymères (7) en caoutchouc non vulcanisé et/ou en matière plastique, ayant une résistance électrique spécifique inférieure à 10 exp 8 ohms x cm, sont introduits à l'aide d'un dispositif d'injection (17).

4. Procédé selon la revendication 3, caractérisé en ce que, pour la production des tampons polymères (7), des mélanges de caoutchouc non vulcanisé et/ou de matière plastique sont introduits sous forme liquide ou dissoute.

5. Procédé selon la revendication 3, caractérisé en ce que, pour la fabrication des tampons polymères (7), des mélanges de caoutchouc non vulcanisé et/ou de matière plastique sont introduits sous forme de chevilles refroidies à basse température.

6. Procédé de fabrication selon au moins l'une quelconque des revendications précédentes, caractérisé en ce que, pour les tampons polymères (7), on utilise du caoutchouc et/ou de la matière plastique qui contient au moins de la polypyridine et/ou du polypyrrole et/ou de la polyaniline.

7. Procédé de fabrication selon au moins l'une quelconque des revendications précédentes, caractérisé en ce que, pour les tampons polymères (7), on utilise du caoutchouc et/ou de la matière plastique qui a une résistance spécifique inférieure à 100 ohms x cm.

8. Procédé selon au moins l'une quelconque des revendications précédentes, caractérisé en ce que l'on utilise un mélange de caoutchouc contenant de la silice, ce mélange servant de couche de caoutchouc extérieure de la bande de roulement.
